# EUROPEAN PATENT SPECIFICATION

(11) **EP 2 765 540 B1**
(45) Date of publication and mention of the grant of the patent: **25.10.2017**
(21) Application number: 14000378.1
(22) Date of filing: 03.02.2014
(51) Int. Cl.: G06Q 10/00, B65F 1/14

(54) **Apparatus and method for monitoring and checking waste delivery**
Vorrichtung und Verfahren zur Überwachung und Kontrolle von Abfallanlieferung
Appareil et méthode pour la surveillance et la vérification de la livraison des déchets

(30) Priority: 06.02.2013 IT GE20130018
(43) Date of publication of application: 13.08.2014
(73) Proprietor: O.M.G. di Geminiani Gino, 63087 Comunanza (AP) (IT)
(72) Inventor: Geminiani, Gino, 63087 Comunanza AP (IT)
(74) Representative: Natali, Dario

(56) References cited:
- WO-A2-02/096780
- WO-A2-2007/108913
- GB-A- 2 483 481
- US-A1- 2002 030 595
- US-A1- 2002 069 137
- US-A1- 2002 077 875
- US-A1- 2004 199 401
- US-B1- 6 226 617

## Description

The present invention relates to a method and an apparatus for monitoring and checking waste delivery, particularly selective waste collection.

Currently, the state of the art provides various types of control in order to identify the user performing waste delivery as well as to check if the delivery occurs properly and correctly.

Other approaches aim either to determine the amount of waste delivered or to guide the user in delivering the waste appropriately.

For example, certain waste collection containers are provided with means for controlling the opening of the lid which allow only the container intended to receive a particular waste to be opened; for example, in the case of a paper waste, only the paper container is opened.

These approaches allow the user and the waste delivery to be monitored in an approximate and coarse manner.

For example, they do not provide a remedy for the controversial practice of fraudulent waste management organizations to alter the collected amount of waste by declaring an increased amount in order to obtain an illegal gain at the expense of citizens or local administrations, who/which are charged with increased bills.

In fact, with the above-mentioned approaches, the data collected is only used to quantify the amount that the user should pay for the waste service.

In addition, the current types of domestic waste delivery do not provide means for correcting users' bad habits and for training them to deliver waste selectively in the best way.

The international patent application published as WO 02/096780 A2 discloses a method for billing a customer for waste collection. The method includes the step of identifying an amount of recyclable waste and the step of determining a credit amount based on the amount of recyclable waste. A container for use in a recycling system including a structure for containing recyclable waste is also described; and an indicia disposed on the structure identifying the value of the recyclable waste contained by the structure.

The U.S. patent application published as US 2002/030595 A1 discloses a signalling device mating with a conventional container to develop a change in state for indicating that the container has been accessed. The change in state can be developed manually, or automatically when the cover of the container is opened, to signal that the container has been accessed, and can be automatically returned to the initial state as part of the procedures used to empty the container.

The U.S. patent application published as US 2002/069137 A1 discloses a system for managing the flow of collection and recycling of home products, wherein the required information is managed between a center which manages the whole, a collection applicant, a collection company, a disassembly company and a manufacturer, and required information is exchanged between the parties concerned.

The U.S. patent application published as US 2004/199401 A1 discloses an electronic trash disposal unit comprising a control unit which scans and identifies disposed items to store them in an appropriate recycling bin. The unit is connectable to a communication network which updates a central database with the contents of each unit. The unit initiates a reorder instruction to suppliers.

The U.S. patent application published as US 2002/077875 A1 discloses an apparatus and electronic system for optimizing a trash pick-up schedule of a plurality of trash compactors is disclosed. The system comprises the steps of measuring the weight of trash in a trash compactor; calculating from said trash weight a targeted trash weight optimal for pick up; predicting a pick-up time based on said trash weight and said optimal trash weight; transmitting a signal to a fleet management unit; calculating a pick-up schedule for said plurality of trash compactors; generating a bill containing accounting information for said trash compactor unit; and generating a warning when said trash compactor unit malfunctions.

The U.S. patent published as US 6226617 B1 discloses a manufactured article treatment processing method and system includes reading out from a manufactured article being subjected to treatment information of component parts of the article and specific properties of the component parts, extraction of the component parts to be separated on the basis of predetermined specific properties serving as information for detachment and specific properties of the component parts, and treatment of the component parts to be separated and other components parts through different processes, respectively.

The British patent application published as GB 2483481 A1 discloses a method for determining the shape of an object comprising the steps of: illuminating the object by projecting a structured light pattern generated by a plurality of projector pixels onto the object; forming an image from a plurality of camera pixels of the object; determining the intensity distribution of the image, on a pixel by pixel basis; identifying on a pixel by pixel basis a projector pixel corresponding to a camera pixel; adjusting the intensity of the structured light pattern on a pixel by pixel basis in dependence on the intensity distribution of the image to produce an intensity adjusted structured light pattern; using the intensity-adjusted structured light pattern to determine the shape of the object.

The international patent application published as WO 2007/108913 A2 discloses a system and methods for managing a recycling program including the step of receiving waste materials from a user and the step of receiving recyclable materials from the user. Further, the step of measuring a quantity of waste materials received and the step of measuring a quantity of recyclable materials received. Further still, calculating a user-specific diversion rate based upon the ratio of recyclable materials as compared to the sum of recyclable materials and waste materials.

An aim of the present invention is to provide an apparatus for identifying each bag delivered by a single user.

A further aim of the present invention is to provide a method which allows for an accurate comparison between the amount of waste delivered at the waste delivery area and the amount declared by the collection/sorting facility in order to monitor and verify the path followed by each bag as well as to determine the actual amounts of waste which have been transferred to the collection/sorting facility.

Accordingly, an object of the present invention is an apparatus for monitoring and checking waste delivery, particularly selective waste collection, provided with a vertical post attached to a support base, said apparatus being arranged in the vicinity of an area intended for waste delivery and provided with a plurality of waste containers, each of said waste delivery containers being provided with a lid, said apparatus comprising sensor means for detecting the weight of the waste to be delivered which are provided with a plate for the positioning of said waste, means for detecting the volume of the waste to be delivered, lighting means, photovoltaic panels, video surveillance means capable of monitoring both user's operations and said waste delivery area, a processing/controlling unit provided with means for reading a user identification means, user interface means, data transmission means, acoustic and/or visual warning means, and means capable of generating labels applicable to delivery bags in order to allow for the identification thereof at a collection/sorting facility, wherein the apparatus further comprises means for opening and closing said lid of each waste containers and wherein the processing/controlling unit is able to activate the opening means of the lid of the appropriate waste container while maintaining closed the other waste containers.

A further object of the present invention is to provide a method of use of the apparatus for monitoring and checking waste delivery according to the present invention, which comprises the following operational steps:
a) causing the reading means of the processing unit to identify the user by reading the user identification means;
b) prompting the user to correctly position the bag on the positioning plate of the weight detecting means;
c) checking the correct positioning of the bag on said positioning plane of the weight detecting means;
d) prompting the user to select the type of waste being delivered;
e) causing the processing/controlling unit to acquire data about the weight and volume of said bag;
f) causing the processing/controlling unit to analyse and process the data about the weight and volume of the bag;
g) causing the processing/controlling unit to generate a label applicable to the bag and containing main user information, the type of delivery being performed, and the weight and volume of the bag;
h) prompting the user to apply the label to the bag;
i) prompting the user to deliver the bag into the appropriate container among a plurality of waste delivery containers (3), each of said waste delivery containers (3) being provided with a lid;
j) causing the waste delivery monitoring means to monitor the user in order to check if the user is delivering the bag into the appropriate container;
k) causing the processing/controlling unit to confirm to the user that the delivery has been performed;
l) once the delivery has been performed, prompting the user to indicate if the delivery is completed or if he/she wants to continue with the delivery,
m) if the delivery is completed, prompting the user to recover the identification means;
n) if the user wants to continue with the delivery, returning to step b,
wherein the apparatus further comprises means for opening and closing said lid of each waste containers and wherein the processing/controlling unit is able to activate the opening means of the lid of the appropriate waste container while maintaining closed the other waste containers.

These and other features of the invention, and the advantages derived therefrom, will become apparent from the following detailed description of a preferred embodiment thereof which is provided by way of a non-limiting example with reference to the accompanying drawings, in which:
Fig. 1 shows the apparatus for monitoring and checking waste delivery according to the present invention as applied to a generic domestic waste delivery area;
Figure 2 is a block diagram of the method of use of the apparatus for monitoring and checking waste delivery according to the present invention.

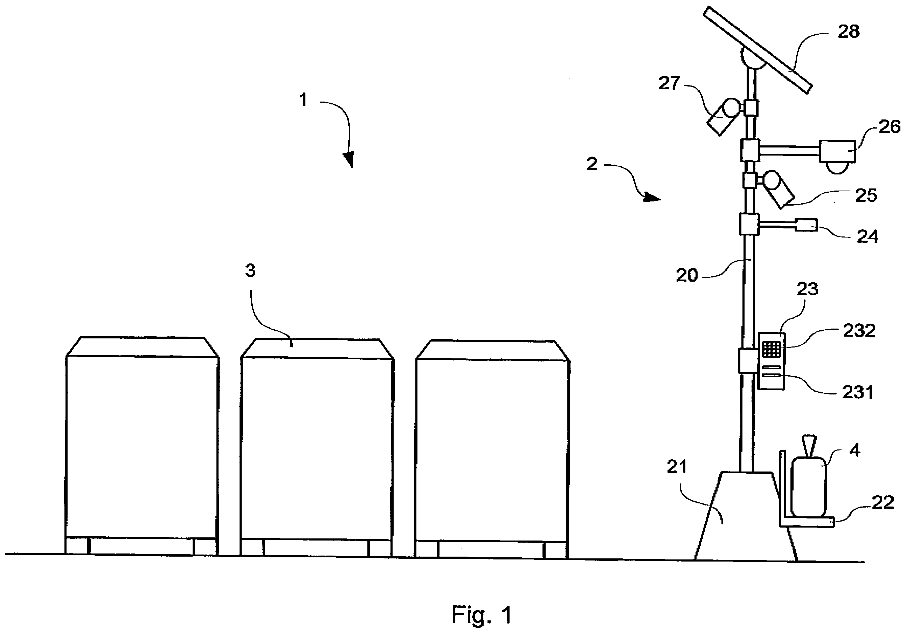

Fig. 1 shows the apparatus for monitoring and checking waste delivery according to the present invention as applied to a generic domestic waste delivery area.

As can be seen in Figure 1 , a generic area 1 intended for waste delivery, essentially an ecological island, comprises containers 3 adapted to receive domestic waste or the like, and the apparatus 2 for monitoring and checking waste delivery according to the present invention.

Said apparatus 2 comprises a support post 20 attached to a support base 21.

Said support post 20 has installed thereon a processing/controlling unit 23, sensor means for detecting the weight of the waste to be delivered which are provided with a plate 22 for the positioning of said waste, at least one sensor means 24 for detecting the volume of the waste to be delivered, at least one means 25 for monitoring waste delivery, at least one means 27 for monitoring the delivery area 1, lighting means 26, and at least one photovoltaic panel 28.

Said processing/controlling unit 23 comprises interface means provided with selection means 232 and display means (not shown in the figure) for the type of waste to be delivered, reading means 231 capable to cooperate with user identification means, remote data transmission means, means for generating labels applicable to a relevant bag 4, acoustic and/or visual warning means, and display means.

The processing/controlling unit 23 is advantageously provided with a piece of software intended to capture - through the sensor means 22, 24 and the monitoring means 25 and 27 - and manage data about the waste delivered by the user, to identify said user through the reader 231 of the user identification means, to generate a label applicable to the bag 4 and containing both data about the type of waste being delivered and user data, and to transmit said data remotely through the data transmission means.

Moreover, through the waste delivery monitoring means 25, the processing/controlling unit 23 is able to check if the user is delivering the waste into the appropriate waste container 3 and, in case of selection of a wrong container 3, to warn the user through the acoustic and/or visual warning means.

In fact, if the user classify the contents of the bag 4 being delivered as paper, the processing unit 23 can perform an initial check before generating the label to be applied to the bag 4, by combining data about the weight and volume of said bag 4 to obtain the density thereof, and comparing it with a reference density value for that certain type of waste.

The reference density used by the piece of software for comparison purposes is established a priori.

The processing/controlling unit 23 calculates the density of said bag 4, compares it with the reference value, and checks if the difference between the calculated density and the reference density is below a certain value: if said condition is true, i.e. if the differential density is below said certain value, it means that the selection made by the user is correct, otherwise the processing/controlling unit 23 prompts the user to review the selection that he/she has made for that waste.

The apparatus 2 for monitoring and checking waste delivery according to the present invention is applied to ecological islands comprising waste containers 3 provided with means for opening and closing the lids of said waste containers.

In this case, the processing/controlling unit 23 will activate the opening means of the appropriate waste container while maintaining the other containers closed.

The photovoltaic panel 28 allows the apparatus 2 to be autonomous and independent from external electrical power sources; however, advantageously, a connection to the electrical power network will be still provided in order to avoid any kind of problem concerning the malfunction of the solar panel or a poor solar radiation during the winter.

In the described embodiment, the domestic waste collection means comprise bags 4 which are transparent in order to facilitate checking the contents thereof and to allow for a visual inspection thereof from the outside, however, the domestic waste can also be collected in appropriate containers such as envelopes, sachets or the like.

The piece of software of the processing/controlling unit 23 of the apparatus according to the present invention operates in a self-learning mode, and this allows said apparatus to perform the various activities in an autonomous and independent manner.

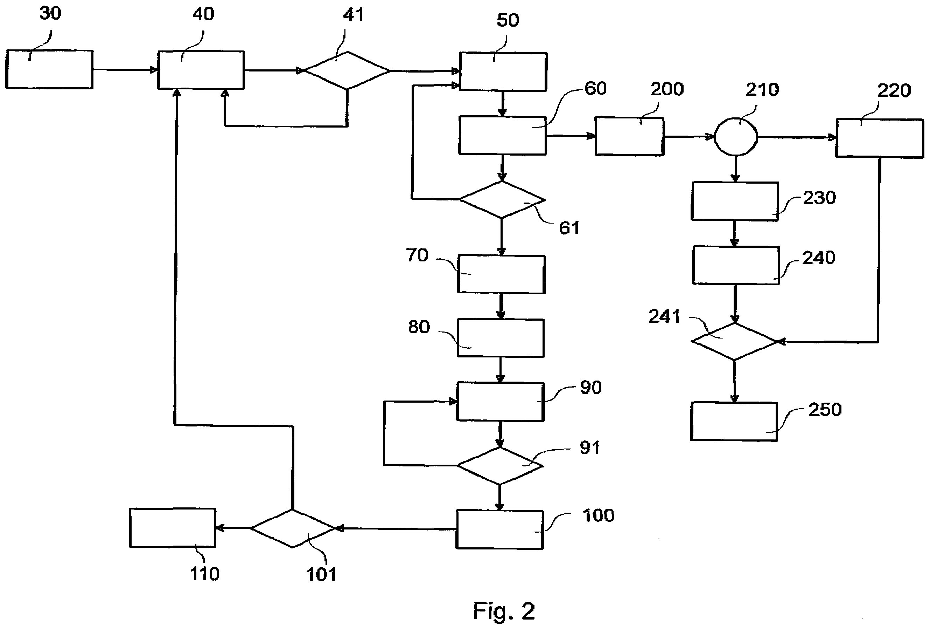

Figure 2 is a block diagram of the method of use of the apparatus for monitoring and checking waste delivery according to the present invention.

Assuming that like numerals refer to like parts, the figure illustrates the block diagram representing the steps of the method according to the present invention.

Step 30 comprises causing the reading means 231 of the processing/controlling unit 23 to identify the user by reading the user identification means.

Said user identification means comprises USB (Universal Serial Bus) devices, electronic keys, magnetic cards or the like, and it is able to cooperate with the reading means 231 of the processing unit 23 in order to provide all the user data required.

Once step 30 is successfully completed, the method proceeds to step 40, which comprises prompting the user to correctly position the bag 4 on the positioning plate 22 of the weight detecting means.

Said weight detecting means include analogue scales, electronic scales, load cells and the like.

Step 41 checks if the user has correctly positioned the bag 4 on said positioning plate 22.

In fact, said bag 4 should neither touch the ground plane nor protrude from said positioning plate 22; if the positioning is correct, the method proceeds to step 50, otherwise the processing/controlling unit 23 prompts the user to correctly position the bag 4 through the display means or the acoustic means.

The verification of the correct positioning is carried out by the processing/controlling unit 23 through the waste delivery monitoring means 25 and/or through suitable detection sensors.

This step 50 comprises selecting the type of waste being weighed; for example, if the bag 4 contains paper, the user selects an icon representing paper or types the word 'paper' on a keyboard.

In fact, if the case requires so, the processing/controlling unit 23 is provided with means 232 for selecting the type of waste being delivered; advantageously, said selecting means 232 comprise selection buttons, touch-screen displays or keyboards which allow the unit to interact with the user.

Once the type of waste contained in the bag 4 is selected, the method proceeds to step 60.

During said step 60, the processing/controlling unit 23 acquires all the data required about the weight and volume of said bag 4, by determining the weight of the bag through the weight detecting means and by detecting the volume of the bag 4 through a 3D scan performed by the detecting means 24.

The processing/controlling unit 23 proceeds to step 61, in which it analyses and processes the data about the weight and volume of the bag 4.

In fact, the processing/controlling unit 23 calculates the density of said bag 4, compares it with a previously established reference value, and checks if the difference between the calculated density and the reference density is below a certain value: if said condition is true, i.e. if the differential density is below said certain value, it means that the selection made by the user is correct, and the method proceeds, otherwise the processing/controlling unit 23 prompts the user to review the selection that he/she has previously made, and the method returns to step 50.

For example, if the user has classified the contents of the bag 4 as paper, the processing/controlling unit 23 checks if the calculated density falls within the reference parameters.

Once step 61 is completed, the method proceeds to step 70, in which the processing/controlling unit 23 generates a label applicable to the bag 4 and containing main user information, the type of delivery being performed, and the weight and volume of the bag.

In a preferred embodiment, said label comprises an adhesive label having printed thereon all the information required, and the label is then applied to the bag 4.

At step 80, the user applies said label to the bag 4 so as to make it identifiable and traceable at the waste collection/sorting facility to which it is sent.

If the user does not apply the label to the bag 4, the processing/controlling unit 23 monitoring the user through the detecting means 25 halts the delivery operation until the user applies the label.

Once the label is applied, the method proceeds to step 90, in which the user delivers the bag 4 into the appropriate container 3.

During said step 90 and at step 91, the user is monitored by the waste delivery monitoring means 25 so as to check if the user is delivering the bag 4 into the appropriate container 3.

If the user is delivering the bag into a wrong container 3, the processing/controlling unit 23 warns the user by activating the acoustic and/or visual warning means in such a way that the user can become aware of his/her mistake and deliver the bag into the appropriate container.

The delivery area 1 comprises containers 3 provided with lidopening/closing means, the processing unit 23 will activate the opening means of the appropriate waste container while maintaining the other containers closed.

At step 100, the processing/controlling unit 23 confirms to the user that the delivery has been performed and, at step 101, it asks whether the delivery is completed or should be continued.

If the delivery is completed, i.e., if the user does not have more bags 4 to be delivered, the method proceeds to step 110, in which the identification means are recovered by the user.

However, if the user has more bags 4 to be delivered, the method returns to step 40.

This is the portion of the method concerning the user and the bag delivery.

The portion of the method concerning the individual bag 4 and allowing for a precise, accurate control of the contents delivered by the users at the delivery area 1 is now analysed.

The information printed on said label are processed at step 60.

As can be seen from the block diagram, it is inferred that, once step 60 is completed, the method proceeds to step 70, i.e. the generation of the label, and simultaneously to step 200.

At this step 200, the processing/controlling unit 23 uses the data about the weight and volume of the bag 4 to determine the amount of waste delivered into the respective containers 3, and to define the amount of waste which each container can still accommodate.

Once step 200 is completed, the methods proceeds to step 210, i.e. the transmission of data to a remote location through suitable transmission means, wherein said transmission means comprise Wi-Fi connection means, SIM cards or similar devices.

The data transferred during said step 210 include the information carried on the label generated at step 70, i.e. the weight, volume and user of the bag 4 which has been delivered, as well as information about the fill level of each container 3.

The remote location communicates with a collection/sorting facility 230, and it provides the real-time status of the containers 3 and whether they need to be emptied.

At step 220, the remote location generates a detailed list of the individual bags 4 delivered at a specific delivery area 1, and it repeats the operation for all the waste delivery areas whose waste is delivered to that particular collection facility 230.

At the collection facility 230, the method proceeds to step 240, in which each bag 4 is identified by reading the label affixed on said bag 4 through suitable reading means.

Once the bag 4 is identified, the method proceeds to step 241, in which the label of the bag 4 is compared against the detailed list of individual bags 4 delivered at the various ecological islands, as generated at step 220.

If the label of the bag 4 appears in the list, the method proceeds to a confirmation step 250 which represents the last monitoring step for the delivery of the individual bag 4.

Otherwise, if certain bags in the list are not identified as received at the collection/sorting facility 230, the bag is monitored over a specific period of time, and it is stored as not received by the system.

On one hand, this method allows the user to be monitored, and on the other hand, it allows checking that the amount of waste delivered at the delivery area 1 remains unchanged when at the collection/sorting facility 230.

In fact, as for the user, the method according to the present invention can assist the user during delivery as well as improve his/her habits in order to perform an accurate, selective collection in compliance with the rules of the collection/sorting facility 230.

In fact, the operator of such a collection/sorting facility can not only identify the bag 4 but also monitor the contents thereof and, in the case of inaccuracies in the differentiation of the waste, the operator can notify these inaccuracies to the user.

The organization in charge of managing waste collection can make use of said tool even to fine those users who do not differentiate or differentiate in the wrong way.

Another advantage of the method according to the present invention is the ability to verify whether the amount of waste delivered at the delivery area 1 is the same as that at the collection/sorting facility 230.

This avoids the potential that accommodating organizations can alter the declared amounts of collected waste in order to obtain an illegal gain at the expense of citizens or local administrations.

A further advantage results from the fact that the piece of software of the processing/controlling unit 23 of the apparatus according to the present invention operates in a self-learning mode, and this allows said apparatus to perform the various activities in an autonomous and independent manner.

## Claims

1. Apparatus for monitoring and checking waste delivery, particularly selective waste collection, provided with a vertical post (20) attached to a support base (21), said apparatus being arranged in the vicinity of an area (1) intended for waste delivery and provided with a plurality of waste containers (3), each of said waste delivery containers (3) being provided with a lid, said apparatus comprising
- sensor means for detecting the weight of the waste to be delivered which are provided with a plate (22) for the positioning of said waste,
- means (24) for detecting the volume of the waste to be delivered,
- lighting means (26), photovoltaic panels (28), video surveillance means (25, 27) capable of monitoring both user's operations and said waste delivery area (1),
- user interface means for selecting the type of waste being delivered,
- a processing/controlling unit (23) provided with means (231) for reading a user identification means, and means for combining the detected weight and the detected volume of the waste to be delivered to obtain the density thereof in order to check that the obtained density corresponds to the selected type of waste,
- data transmission means,
- acoustic and/or visual warning means, and
- means capable of generating labels applicable to delivery bags (4) in order to allow for the identification thereof at a collection/sorting facility (230),
wherein the apparatus further comprises means for opening and closing said lid of each waste containers (3) and wherein the processing/controlling unit (23) is able to activate the opening means of the lid the appropriate waste container (3) for the selected type of waste while maintaining closed the other waste containers (3).

2. Apparatus according to claim 1, wherein said user identification means comprises USB (Universal Serial Bus) devices, electronic keys, magnetic cards or the like, and it is able to cooperate with the reading means (231) of the processing/controlling unit (23) in order to provide all the user data required.

3. Apparatus according to claim 1, wherein said interface means comprise display means and selection means (232) provided with selection buttons, touch-screen displays, keyboards or the like.

4. Method of use of the apparatus according to claim 1 for monitoring and checking waste delivery, which comprises the following operational steps:
a) causing the reading means (231) of the processing unit (23) to identify the user by reading the user identification means;
b) prompting the user to correctly position the bag (4) on the positioning plate of the weight detecting means (22);
c) checking the correct positioning of the bag (4) on said positioning plane of the weight detecting means (22);
d) prompting the user to select the type of waste being delivered;
e) causing the processing/controlling unit (23) to acquire data about the weight and volume of said bag (4) and to combine the detected weight and the detected volume of the waste to be delivered to obtain the density thereof in order to check that the obtained density corresponds to the selected type of waste;
f) causing the processing/controlling unit (23) to analyse and process the data about the weight and volume of the bag (4);
g) causing the processing/controlling unit (23) to generate a label applicable to the bag (4) and containing main user information, the type of delivery being performed, and the weight and volume of the bag (4);
h) prompting the user to apply the label to the bag (4);
i) prompting the user to deliver the bag (4) into the appropriate container (3) among a plurality of waste delivery containers (3), each of said waste delivery containers (3) being provided with a lid;
j) causing the video surveillance means (25) to monitor the user in order to check if the user is delivering the bag (4) into the appropriate container (3);
k) causing the processing/controlling unit (23) to confirm to the user that the delivery has been performed;
l) once the delivery has been performed, prompting the user to indicate if the delivery is completed or if he/she wants to continue with the delivery;
m)if the delivery is completed, prompting the user to recover the identification means;
n) if the user wants to continue with the delivery, returning to step b.

5. Method according to claim 4, wherein the processing/controlling unit (23) calculates the density of said bag (4), compares it with a previously established reference value, and checks if the difference between the calculated density and the reference density is above or below a certain value.

6. Method according to claim 5, wherein, if the differential density is below said certain value, the next step is carried out.

7. Method according to claim 5, wherein, if the differential density is above said certain value, the processing/controlling unit (23) prompts the user to check the previous selection, and the method returns to the waste type selection step.

8. Method according to claim 4, wherein, if the user does not apply said adhesive label to the bag (4), the processing/controlling unit (23) monitoring the user by means of the video surveillance means (25) halts the delivery operation.

9. Method according to claim 4, wherein, during the step of delivery into the containers (3), the user is monitored by means of the video surveillance means (25) in order to check if the user is delivering the bag (4) into the appropriate container (3).

10. Method according to claim 4, wherein the processing/controlling unit (23) uses the data about the weight and volume of the bag (4) to determine the amount of waste delivered into the respective containers (3) and to define the amount of waste which each container can still accommodate.

11. Method according to claim 4, wherein the processing/controlling unit 23 transmits, by means of suitable transmission means, the information about the weight, the volume and the user of the delivery bag (4), as well as the information about the fill level of each container (3), to a remote location communicating with the collection/sorting facility (230).

12. Method according to claim 11, wherein the remote station generates a list of the individual bags (4) delivered at a specific waste delivery area (1) and repeats the operation for all the waste delivery areas whose waste is delivered to that particular collection facility (230).

13. Method according to claim 11, wherein each bag (4) is identified at the collection/sorting facility (230) by causing suitable reading means to read the label on said bag (4).

14. Method according to claims 12 and 13, wherein the label on each bag (4) is compared against the detailed list of individual bags (4) which have been delivered at the plurality of waste delivery areas (1).

15. Method according to any one of the preceding claims 4 and 14, wherein said method is self-learning.

## Patentansprüche

1. Vorrichtung zur Überwachung und Kontrolle der Abfallanlleferung, insbesondere selektive Abfallsammlung, ausgestattet mit einem vertikalen Ständer (20), der an einer Stützbasis (21) angebracht wurde. Besagte Vorrichtung liegt in der Nähe eines Bereichs (1), der für die Abfallanlleferung vorgesehen ist und mit einer Vielzahl an Abfallbehältern (3) ausgestattet ist. Jeder der besagten Abfallanlleferungsbehälter ist mit einem Deckel ausgestattet. Besagte Vorrichtung umfasst
- Sensorvorrichtung für die Erfassung des Gewichts des abzugebenden Abfalls, welche mit einer Platte (22) für die Positionierung des besagten Abfalls ausgestattet ist,
- Vorrichtung (24) für die Erfassung des Volumens des abzugebenden Abfalls,
- Beleuchtungsmittel (26), Photovoltaik-Panels (28), Videoüberwachungsvorrichtung (25, 27), die in der Lage ist, sowohl die Tätigkeiten des Benutzers als auch besagten Abfallanlieferungsbereich zu überwachen (1),
- Benutzerschnittstellenvorrichtung für die Auswahl der Art des abzugebenden Abfalls,
- eine Verarbeitungs-/Steuereinheit (23), ausgestattet mit einer Vorrichtung (231) zum Lesen einer Benutzeridentifikationsvorrichtung, und eine Vorrichtung zum Kombinieren des erfassten Gewichts und des erfassten Volumens des abzugebenden Abfalls, um dessen Dichte zu erhalten, um zu überprüfen, ob die erzielte Dichte der ausgewählten Abfallart entspricht,
- Vorrichtung zur Datenübertragung,
- akustische und/oder visuelle Warnvorrichtung, und
- Vorrichtung, die in der Lage ist, Etiketten zu erstellen, die auf die Liefersäcke (4) angebracht werden können, um ihre Identifizierung an einer Sammel-/Sortiervorrichtung (230) zu ermöglichen, wobei die Vorrichtung weiter eine Vorrichtung für das Öffnen und Schließen des besagten Deckels eines jeden Abfallbehälters (3) umfasst und wobei die Verarbeitungs-/Steuereinheit (23) in der Lage ist, die Öffnungsvorrichtung des Deckels des entsprechenden Abfallbehälters (3) für die ausgewählte Abfallart zu aktivieren, während die anderen Abfallbehälter (3) geschlossen gehalten werden.

2. Vorrichtung gemäß Anspruch 1, wobei besagte Vorrichtung zur Benutzeridentifikation ein USB- (Universal Serial Bus) Gerät, elektronische Schlüssel, Magnetkarten oder ähnliches umfasst und die in der Lage ist, mit der Lesevorrichtung (231) der Verarbeitungs-/Steuereinheit (23) zu kooperieren, um dem Benutzer die erforderlichen Daten zur Verfügung zu stellen.

3. Vorrichtung gemäß Anspruch 1, wobei besagte Schnittstellenvorrichtung ein Display und Auswahlvorrichtung (232) umfasst, die mit Auswahltasten, Touchscreen-Displays, Keyboards oder ähnlichem ausgestattet sind.

4. Verwendungsmethode der Vorrichtung gemäß Anspruch 1 für die Überwachung und Überprüfung der Abfallanlieferung, welche die folgenden Arbeitsschritte umfasst:
a) Auslösen der Lesevorrichtung (231) der Verarbeitungseinheit (23), um den Benutzer durch Lesen der Benutzeridentifikationsvorrichtung zu identifizieren;
b) Auffordern des Benutzers zur korrekten Position des Sacks (4) auf der Positionierungsplatte der Vorrichtung zur Gewichtserfassung (22);
c) Überprüfung der korrekten Position des Sacks (4) auf der besagten Positionierungsplatte der Vorrichtung zur Gewichtserfassung (22);
d) Auffordern des Benutzers zur Auswahl der abzugebenden Ablallart;
e) Auslösen der Verarbeitungs-/Steuereinheit (23) zur Erfassung der Daten über das Gewicht und Volumen des besagten Sacks (4) und zur Kombinierung des erfassten Gewichts und des erfassten Volumens des abzugebenden Abfalls, um dessen Dichte zu erhalten, um zu überprüfen, ob die erzielte Dichte der ausgewählten Ablallart entspricht;
f) Auslösen der Verarbeitungs-/Steuereinheit (23) zur Analyse und Verarbeitung der Daten über das Gewicht und Volumen des besagten Sacks (4);
g) Auslösen der Verarbeitungs-/Steuereinheit (23) zur Erstellung eines Etiketts, das auf dem Sack (4) anbringbar ist und das die Hauptbenutzerinformationen, die Art der Anlieferung, die ausgeführt wird, und das Gewicht und Volumen des Sacks (4) enthält;
h) Auffordern des Benutzers, das Etikett auf dem Sack (4) anzubringen;
i) Auffordern des Benutzers, den Sack (4) in den entsprechenden Behälter (3) unter einer Vielzahl von Vielzahl an Abfallbehältern (3) zu geben, jeder der besagten Abfallbehälter (3) ist mit einem Deckel ausgestattet;
j) Auslösen der Videoüberwachungsvorrichtung (25), um den Benutzer zu überwachen, um zu überprüfen, ob der Benutzer den Sack (4) in den entsprechenden Behälter (3) abgibt;
k) Auslösen der Verarbeitungs-/Steuereinheit (23), um dem Benutzer zu bestätigen, dass die Abgabe durchgeführt wurde;
l) sobald die Abgabe durchgeführt wurde, Auffordern des Benutzers, anzugeben, ob die Abgabe abgeschlossen ist oder ob er/sie mit der Abgabe fortfahren möchte;
m) wenn die Abgabe angeschlossen ist, Auffordern des Benutzers, die Identifikationsvorrichtung wiederherzustellen;
n) wenn der Benutzer mit der Abgabe fortfahren möchte, Rückkehr auf Schritt b.

5. Methode gemäß Anspruch 4, wobei die Verarbeitungs-/Steuereinheit (23) die Dichte des besagten Sacks (4) berechnet, ihn mit einem zuvor festgelegten Referenzwert vergleicht und überprüft, ob die Differenz zwischen der berechneten Dichte und der Referenzdichte über oder unter einem bestimmten Wert liegt.

6. Methode gemäß Anspruch 5, wobei, wenn die Differenz der Dichte unter besagtem Wert liegt, der nächste Schritt ausgeführt wird.

7. Methode gemäß Anspruch 5, wobei, wenn die Differenz der Dichte über besagtem Wert liegt, die Verarbeitungs-/Steuereinheit (23) den Benutzer auffordert, die vorherige Auswahl zu überprüfen und die Methode kehrt auf den Auswahlschritt der Abfallart zurück.

8. Methode gemäß Anspruch 4, wobei, wenn der Benutzer besagtes Klebeetikett nicht auf dem Sack (4) anbringt, die Verarbeitungs-/Steuereinheit (23) über Überwachung des Benutzers über die Videoüberwachungsvorrichtung (25) den Abgabevorgang unterbricht.

9. Methode gemäß Anspruch 4, wobei, während des Schritts der Abgabe in die Behälter (3) der Benutzer über die Videoüberwachungsvorrichtung (25) überwacht wird, um zu überprüfen, ob der Benutzer den Sack (4) in den entsprechenden Behälter (3) abgibt.

10. Methode gemäß Anspruch 4, wobei die Verarbeitungs-/Steuereinheit (23) die Daten über das Gewicht und das Volumen des Sacks (4) verwendet, um die Menge des in die entsprechenden Behälter (3) abgegebenen Abfalls zu bestimmen und um die Menge des Abfalls, den jeder Behälter noch aufnehmen kann, zu definieren.

11. Methode gemäß Anspruch 4, wobei die Verarbeitungs-/Steuereinheit (23) über eine geeignete Übertragungsvorrichtung die Informationen über das Gewicht, das Volumen und den Benutzer des Liefersack (4) sowie die Information über den Füllstand eines jeden Behälters (3) an einen entfernten Standort, der mit der Sammel-/Sortiervorrichtung (230) kommuniziert, überträgt.

12. Methode gemäß Anspruch 11, wobei die entfernte Station eine Liste der einzelnen Säcke (4), die an einen speziellen Abfalianlieferungsbereich (1) geliefert wurden, erstellt und den Vorgang für alle Abfallanlieferungsbereiche, dessen Abfall an eine besondere Sammelvorrichtung (230) gebracht wurde, wiederholt.

13. Methode gemäß Anspruch 11, wobei jeder Sack (4) bei der Sammel-/Sortiervorrichtung (230) durch Auslösen einer geeigneten Lesevorrichtung, um das Etikett auf besagtem Sack (4) zu lesen, identifiziert wird.

14. Methode gemäß den Ansprüchen 12 und 13, wobei das Etikett auf jedem Sack (4) mit der detaillierten Liste der einzelnen Säcke (4), die an die Vielzahl an Abfallanlleferungsberelche (1) geliefert werden, verglichen wird.

15. Methode gemäß einem der vorherigen Ansprüchen 4 und 14, wobei besagte Methode selbstlernend ist.

## Revendications

1. Appareil pour la surveillance et le contrôle du dépôt des déchets, en particulier pour la collecte sélective des déchets, muni d'un poteau vertical (20) fixé à une base de support (21), ledit appareil étant placé à proximité d'une zone (1) destinée au dépôt des déchets et munie de plusieurs récipients à déchets (3), chacun desdits récipients de dépôt de déchets (3) étant muni d'un couvercle, ledit appareil comprenant
- des moyens pour détecter le poids des déchets à déposer, munis d'une plaque (22) pour le positionnement desdits déchets,
- des moyens (24) pour détecter le volume des déchets à déposer,
- des moyens d'éclairage (26), des panneaux photovoltaïques (28), des systèmes de vidéosurveillance (25, 27) en mesure de contrôler à la fois les opérations de l'utilisateur et ladite zone de dépôt de déchets (1),
- des moyens d'interface utilisateur pour la sélection du type de déchets déposés,
- une unité de traitement/contrôle (23) munie de moyens (231) pour lire les systèmes d'identification d'utilisateur, et de moyens pour combiner le poids et le volume détectés des déchets à déposer pour obtenir leur densité afin de vérifier que la densité obtenue corresponde au type de déchets sélectionné,
- des moyens de transmission de données,
- des moyens d'avertissement acoustique et/ou visuel, et
- des moyens en mesure de créer des étiquettes applicables aux sacs à déposer (4) afin de permettre leur identification dans une installation de collecte/tri (230),
dans lequel l'appareil comprend en outre des moyens pour ouvrir et fermer ledit couvercle de chaque récipient à déchets (3) et dans lequel l'unité de traitement/contrôle (23) est en mesure d'activer les moyens d'ouverture du couvercle du récipient à déchets approprié (3) pour le type de déchets sélectionné tout en maintenant fermés les autres récipients à déchets (3).

2. Appareil selon la revendication 1, dans lequel lesdits systèmes d'identification d'utilisateur comprennent des dispositifs USB (bus universel en série), des clés électroniques, des cartes magnétiques ou similaires, et sont en mesure de coopérer avec les moyens de lecture (231) de l'unité de traitement/contrôle (23) afin de fournir toutes les données utilisateur nécessaires.

3. Appareil selon la revendication 1, dans lequel lesdits moyens d'interface comprennent des moyens d'affichage et des moyens de sélection (232) munis de boutons de sélection, d'écrans tactiles, de claviers ou similaires.

4. Procédé d'utilisation de l'appareil selon la revendication 1 pour surveiller et contrôler le dépôt de déchets, comprenant les étapes opérationnelles suivantes:
a) amener les moyens de lecture (231) de l'unité de traitement (23) à identifier l'utilisateur en lisant les systèmes d'identification de l'utilisateur ;
b) inciter l'utilisateur à positionner correctement le sac (4) sur la plaque de positionnement des moyens de détection du poids (22) ;
c) vérifier le positionnement correct du sac (4) sur ladite plaque de positionnement des moyens de détection du poids (22) ;
d) inciter l'utilisateur à sélectionner le type de déchets déposé ;
e) amener l'unité de traitement/contrôle (23) à acquérir des données concernant le poids et le volume dudit sac (4) et à combiner le poids et le volume détectés des déchets à déposer pour obtenir leur densité afin de vérifier que la densité obtenue corresponde au type de déchets sélectionné ;
f) amener l'unité de traitement/contrôle (23) à analyser et traiter les données concernant le poids et le volume du sac (4) ;
g) amener l'unité de traitement/contrôle (23) à créer une étiquette applicable au sac (4) et contenant les informations principales sur l'utilisateur, le type de dépôt exécuté et le poids et le volume du sac (4) ;
h) inciter l'utilisateur à appliquer l'étiquette sur le sac (4) ;
i) inciter l'utilisateur à déposer le sac (4) dans le récipient approprié (3) parmi plusieurs récipients de dépôt de déchets (3), chacun desdits récipients de dépôt de déchets (3) étant muni d'un couvercle ;
j) amener les systèmes de vidéosurveillance (25) à contrôler l'utilisateur afin de vérifier si l'utilisateur dépose le sac (4) dans le récipient approprié (3) ;
k) amener l'unité de traitement/contrôle (23) à confirmer à l'utilisateur que le dépôt a été effectué ;
l) une fois que le dépôt a été effectué, inciter l'utilisateur à indiquer si le dépôt est terminé ou s'il souhaite continuer le dépôt ;
m) si le dépôt est terminé, inciter l'utilisateur à récupérer les systèmes d'identification ;
n) si l'utilisateur souhaite continuer le dépôt, retourner à l'étape b.

5. Procédé selon la revendication 4, dans lequel l'unité de traitement/contrôle (23) calcule la densité dudit sac (4), la compare à une valeur de référence préalablement établie et vérifie si la différence entre la densité calculée et la densité de référence est supérieure ou inférieure à une certaine valeur.

6. Procédé selon la revendication 5, dans lequel, si la densité différentielle est inférieure à ladite certaine valeur, l'étape suivante est effectuée.

7. Procédé selon la revendication 5, dans lequel, si la densité différentielle est supérieure à ladite certaine valeur, l'unité de traitement/contrôle (23) incite l'utilisateur à vérifier la sélection précédente, et le procédé retourne à l'étape de sélection du type de déchets.

8. Procédé selon la revendication 4, dans lequel, si l'utilisateur n'applique pas ladite étiquette adhésive sur le sac (4), l'unité de traitement/contrôle (23) surveillant l'utilisateur au moyen de systèmes de vidéosurveillance (25) arrête l'opération de dépôt.

9. Procédé selon la revendication 4, dans lequel, pendant l'étape de dépôt dans les récipients (3), l'utilisateur est surveillé au moyen de systèmes de vidéosurveillance (25) afin de vérifier si l'utilisateur dépose le sac (4) dans le récipient approprié (3).

10. Procédé selon la revendication 4, dans lequel l'unité de traitement/contrôle (23) utilise les données concernant le poids et le volume du sac (4) pour déterminer la quantité de déchets déposés dans les récipients respectifs (3) et pour définir la quantité de déchets que chaque récipient peut encore accueillir.

11. Procédé selon la revendication 4, dans lequel l'unité de traitement/contrôle (23) transmet, à l'aide de moyens de transmission appropriés, les informations concernant le poids, le volume et l'utilisateur du sac (4) à déposer, ainsi que les informations concernant le niveau de remplissage de chaque récipient (3), à un lieu communiquant à distance avec l'installation de collecte/tri (230).

12. Procédé selon la revendication 11, dans lequel la station à distance crée une liste des sacs individuels (4) déposés dans une zone de dépôt de déchets spécifique (1) et répète l'opération pour toutes les zones de dépôt de déchets dont les déchets sont déposés dans cette installation de collecte particulière (230).

13. Procédé selon la revendication 11, dans lequel chaque sac (4) est identifié à l'installation de collecte/tri (230) en amenant les moyens de lecture appropriés à lire l'étiquette sur ledit sac (4).

14. Procédé selon les revendications 12 et 13, dans lequel l'étiquette sur chaque sac (4) est comparée à la liste détaillée de sacs individuels (4) ayant été déposés dans les nombreuses zones de dépôt de déchets (1).

15. Procédé selon l'une quelconque des revendications précédentes 4 et 14, dans lequel ledit procédé est basé sur l'autoapprentissage.
